# EUROPEAN PATENT APPLICATION

(11) **EP 4 521 805 A1**
(43) Date of publication of application: **12.03.2025**
(21) Application number: 23815112.0
(22) Date of filing: 26.05.2023
(51) Int. Cl.: H04W 24/02

(54) **COMMUNICATION METHOD AND APPARATUS**

(30) Priority: 01.06.2022 CN 202210621195
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: MERH-IP Matias Erny Reichl Hoffmann Patentanwälte PartG mbB
(86) International application number: PCT/CN2023/096616
(87) International publication number: WO 2023/231929

(57) **Abstract**

This application provides a communication method and apparatus. The method includes: A terminal receives first information from a first node, where the first information indicates a trigger condition for recording a first report, and the terminal accesses a master base station; the terminal records the first report when the trigger condition is satisfied, where the first report includes information in a process in which the terminal is handed over from a source secondary base station to a target secondary base station, and there is a correspondence between the first report and the first node; and the terminal sends the first report to the first node. According to the method in this application, the terminal records the first report when the trigger condition is satisfied. Because there is the correspondence between the first report and the first node, the terminal may correctly send the first report to the first node in time, so that the first node optimizes a mobility parameter based on the first report.

## Description

This application claims priority to Chinese Patent Application No. 202210621195.6, filed with the China National Intellectual Property Administration on June 1, 2022 and entitled "COMMUNICATION METHOD AND APPARATUS", which is incorporated herein by reference in its entirety.

### TECHNICAL FIELD

This application relates to the communication field, and specifically, to a communication method and apparatus.

### BACKGROUND

In a wireless network, one terminal may communicate with a plurality of base stations, that is, perform dual connectivity (dual connectivity, DC) communication. In DC, the terminal may communicate with a master base station and a secondary base station, and the secondary base station accessed by UE may be handed over, that is, handed over from a source secondary base station to a target secondary base station. The UE may record, in a successful primary secondary cell change report (successful PSCell change report, SPCR), information in a process of handover from the source secondary base station to the target secondary base station, and report the information to a network node.

Even if the terminal is successfully handed over to the target secondary base station, there may be a potential problem that causes a secondary base station handover failure in the future in the handover process. If the network node identifies such a potential problem, the network node may perform mobility optimization on the terminal accordingly. Therefore, the SPCR may include information related to the potential problem, and the information may be referred to as potential failure information.

The master base station, the source secondary base station, and the target secondary base station can all configure, for the terminal, a trigger condition for recording the SPCR. For example, both the master base station and the source secondary base station configure, for the terminal, the trigger condition for recording the SPCR. Therefore, the terminal may send the SPCR to an incorrect network node, resulting in a failure in accurately performing mobility optimization

### SUMMARY

This application provides a communication method and apparatus, to send an SPCR recorded by a terminal to a correct network node.

According to a first aspect, a communication method is provided. The communication method includes:

A terminal receives first information from a first node, where the first information indicates a trigger condition for recording a first report, and the terminal accesses a master base station; the terminal records the first report when the trigger condition is satisfied, where the first report includes information in a process in which the terminal is handed over from a source secondary base station to a target secondary base station, and there is a correspondence between the first report and the first node; and the terminal sends the first report to the first node.

According to the method in this application, the terminal records the first report when the trigger condition is satisfied. Because there is the correspondence between the first report and the first node, the first report can be correctly sent to the first node in a timely manner, so that the first report can be effectively used to adjust a mobility parameter, to improve utilization of the first report and enhance a mobility optimization effect for the terminal. In addition, based on the mobility parameter adjusted based on the first report, a success rate of a subsequent secondary base station handover procedure can be improved, and continuity of dual connectivity communication can be ensured.

With reference to the first aspect, in some implementations of the first aspect, the first report includes identification information of the first node.

With reference to the first aspect, in some implementations of the first aspect, the method further includes:

The terminal records identification information of the first node, where the identification information of the first node is information independent of the first report.

With reference to the first aspect, in some implementations of the first aspect, that the terminal sends the first report to the first node includes:

The terminal directly sends the first report to the first node.

With reference to the first aspect, in some implementations of the first aspect, that the terminal sends the first report to the first node includes:

The terminal sends the first report to the first node via at least one intermediate node. The method further includes:

The terminal sends the identification information of the first node to a first intermediate node, where the first intermediate node is a node accessed by the terminal in the at least one intermediate node.

With reference to the first aspect, in some implementations of the first aspect, the method further includes:

The terminal determines whether the first intermediate node supports a radio access technology (radio access technology, RAT) corresponding to the first report, where the first intermediate node supports the RAT corresponding to the first report, and the first report includes the identification information of the first node; or the first intermediate node does not support the RAT corresponding to the first report, and the identification information of the first node is the information independent of the first report; or the first intermediate node supports the RAT corresponding to the first report, and the identification information of the first node is the information independent of the first report.

In this application, that the terminal determines whether the first intermediate node supports the RAT corresponding to the first report may also be understood as that the terminal determines whether the first intermediate node can parse the first report.

With reference to the first aspect, in some implementations of the first aspect, the first node is the master base station, and the trigger condition is that a potential failure occurs on a communication link between the terminal and the master base station; or the first node is the source secondary base station, and the trigger condition is that a potential failure occurs on a communication link between the terminal and the source secondary base station; or the first node is the target secondary base station, and the trigger condition is that a potential failure occurs on a communication link between the terminal and the target secondary base station.

According to a second aspect, a communication method is provided. The communication method includes:

A first intermediate node receives a first report from a terminal, where the first report corresponds to a first node, the first report includes information in a process in which the terminal is handed over from a source secondary base station to a target secondary base station, and the terminal accesses a source master base station; and the first intermediate node sends the first report to the first node.

According to the method in this application, because the first report corresponds to the first node, the first intermediate node may correctly send the first report to the first node in a timely manner, to avoid sending the first report to an incorrect node, so that the first report can be effectively used to adjust a mobility parameter, to improve utilization of the first report and enhance a mobility optimization effect for the terminal.

With reference to the second aspect, in some implementations of the second aspect, the first intermediate node supports a RAT corresponding to the first report, and the first report further includes identification information of the first node.

With reference to the second aspect, in some implementations of the second aspect, the method further includes:

The first intermediate node receives identification information of the first node from the terminal, where the identification information of the first node is information independent of the first report.

With reference to the second aspect, in some implementations of the second aspect, that the first intermediate node sends the first report to the first node includes:

The first intermediate node directly sends the first report to the first node.

With reference to the second aspect, in some implementations of the second aspect, that the first intermediate node sends the first report to the first node includes:

The first intermediate node sends the first report to the first node via a second intermediate node.

With reference to the second aspect, in some implementations of the second aspect, if the first report includes the identification information of the first node, that the first intermediate node sends the first report to the first node via a second intermediate node includes:

The first intermediate node obtains the identification information of the first node from the first report when the second intermediate node does not support the RAT corresponding to the first report; and the first intermediate node sends the first report and the identification information of the first node to the second intermediate node, where the identification information of the first node is the information independent of the first report.

With reference to the second aspect, in some implementations of the second aspect, the first intermediate node is the source master base station, the target secondary base station, or a target master base station, and the target master base station is a master base station that is accessed by the terminal after the terminal is handed over from the source master base station; and the first node is the source master base station, and an identifier of the first node is an identifier of a primary cell managed by the source master base station; or the first node is the source secondary base station, and an identifier of the first node is an identifier of a primary secondary cell managed by the source secondary base station; or the first node is the target secondary base station, and an identifier of the first node is an identifier of a primary secondary cell managed by the target secondary base station.

According to a third aspect, a communication method is provided. The communication method includes:

A first node sends first information, where the first information indicates a trigger condition for recording a first report, and the first node is a master base station, a source secondary base station, or a target secondary base station accessed by a terminal; the first node receives the first report from the terminal, where the first report includes information in a process in which the terminal is handed over from the source secondary base station to the target secondary base station, and the first report is sent by the terminal when the trigger condition is satisfied; and the first node optimizes a secondary base station handover procedure based on the first report.

According to the method in this application, the first node can correctly receive the first report from the terminal in a timely manner, so that the first report can be effectively used to adjust a mobility parameter, to improve utilization of the first report and enhance a mobility optimization effect for the terminal. In addition, based on the mobility parameter adjusted based on the first report, a success rate of a subsequent secondary base station handover procedure can be improved, and dual connectivity communication can be ensured, so that the first node can optimize the secondary base station handover procedure based on the first report.

With reference to the third aspect, in some implementations of the third aspect, the first node is the master base station, and the trigger condition is that a potential failure occurs on a communication link between the terminal and the master base station; or the first node is the source secondary base station, and the trigger condition is that a potential failure occurs on a communication link between the terminal and the source secondary base station; or the first node is the target secondary base station, and the trigger condition is that a potential failure occurs on a communication link between the terminal and the target secondary base station.

According to a fourth aspect, a communication apparatus is provided. The communication apparatus includes a transceiver unit and a processing unit connected to the transceiver unit.

The transceiver unit is configured to receive first information from a first node, where the first information indicates a trigger condition for recording a first report, and a terminal accesses a master base station. The processing unit is configured to record the first report when the trigger condition is satisfied, where the first report includes information in a process in which the terminal is handed over from a source secondary base station to a target secondary base station, and there is a correspondence between the first report and the first node. The transceiver unit is configured to send the first report to the first node.

With reference to the fourth aspect, in some implementations of the fourth aspect, the first report includes identification information of the first node.

With reference to the fourth aspect, in some implementations of the fourth aspect, the processing unit is configured to record identification information of the first node, where the identification information of the first node is information independent of the first report.

With reference to the fourth aspect, in some implementations of the fourth aspect, the transceiver unit is configured to directly send the first report to the first node.

With reference to the fourth aspect, in some implementations of the fourth aspect, the transceiver unit is configured to send the first report to the first node via at least one intermediate node. The transceiver unit is configured to send the identification information of the first node to a first intermediate node, where the first intermediate node is a node accessed by the terminal in the at least one intermediate node.

With reference to the fourth aspect, in some implementations of the fourth aspect, the processing unit is configured to determine whether the first intermediate node supports a RAT corresponding to the first report, where the first intermediate node supports the RAT corresponding to the first report, and the first report includes the identification information of the first node; or the first intermediate node does not support the RAT corresponding to the first report, and the identification information of the first node is the information independent of the first report; or the first intermediate node supports the RAT corresponding to the first report, and the identification information of the first node is the information independent of the first report.

With reference to the fourth aspect, in some implementations of the fourth aspect, the first node is the master base station, and the trigger condition is that a potential failure occurs on a communication link between the terminal and the master base station; or the first node is the source secondary base station, and the trigger condition is that a potential failure occurs on a communication link between the terminal and the source secondary base station; or the first node is the target secondary base station, and the trigger condition is that a potential failure occurs on a communication link between the terminal and the target secondary base station.

According to a fifth aspect, a communication apparatus is provided. The communication apparatus includes a transceiver unit and a processing unit connected to the transceiver unit.

The transceiver unit is configured to receive a first report from a terminal, where the first report corresponds to a first node, the first report includes potential failure information in a process in which the terminal is handed over from a source secondary base station to a target secondary base station, and the terminal accesses a source master base station. The transceiver unit is configured to send the first report to the first node.

With reference to the fifth aspect, in some implementations of the fifth aspect, a first intermediate node supports a RAT corresponding to the first report, and the first report further includes identification information of the first node.

With reference to the fifth aspect, in some implementations of the fifth aspect, the transceiver unit is configured to receive identification information of the first node from the terminal, where the identification information of the first node is information independent of the first report.

With reference to the fifth aspect, in some implementations of the fifth aspect, the transceiver unit is configured to directly send the first report to the first node.

With reference to the fifth aspect, in some implementations of the fifth aspect, the transceiver unit is configured to send the first report to the first node via a second intermediate node.

With reference to the fifth aspect, in some implementations of the fifth aspect, if the first report includes the identification information of the first node, the transceiver unit is configured to obtain the identification information of the first node from the first report when the second intermediate node does not support the RAT corresponding to the first report; and the transceiver unit is configured to send the first report and the identification information of the first node to the second intermediate node, where the identification information of the first node is the information independent of the first report.

With reference to the fifth aspect, in some implementations of the fifth aspect, the first intermediate node is the source master base station, the target secondary base station, or a target master base station, and the target master base station is a master base station that is accessed by the terminal after the terminal is handed over from the source master base station; and the first node is the source master base station, and an identifier of the first node is an identifier of a primary cell managed by the source master base station; or the first node is the source secondary base station, and an identifier of the first node is an identifier of a primary secondary cell managed by the source secondary base station; or the first node is the target secondary base station, and an identifier of the first node is an identifier of a primary secondary cell managed by the target secondary base station.

According to a sixth aspect, a communication apparatus is provided. The communication apparatus includes a transceiver unit and a processing unit connected to the transceiver unit.

The transceiver unit is configured to send first information, where the first information indicates a trigger condition for recording a first report, and the first node is a master base station, a source secondary base station, or a target secondary base station accessed by a terminal; and the transceiver unit is configured to receive the first report from the terminal, where the first report includes information in a process in which the terminal is handed over from the source secondary base station to the target secondary base station, and the first report is sent by the terminal when the trigger condition is satisfied. The processing unit is configured to optimize a secondary base station handover procedure based on the first report.

With reference to the sixth aspect, in some implementations of the sixth aspect, the first node is the master base station, and the trigger condition is that a potential failure occurs on a communication link between the terminal and the master base station; or the first node is the source secondary base station, and the trigger condition is that a potential failure occurs on a communication link between the terminal and the source secondary base station; or the first node is the target secondary base station, and the trigger condition is that a potential failure occurs on a communication link between the terminal and the target secondary base station.

According to a seventh aspect, a communication device is provided. The communication device includes a communication interface and a processor. When the communication device runs, the processor executes a computer program or instructions stored in a memory, to enable the communication device to perform the method in any one of the possible implementations in the first aspect to the third aspect. The memory may be located in the processor, or may be implemented by using a chip independent of the processor. This is not specifically limited in this application.

According to an eighth aspect, a computer-readable storage medium is provided. The computer-readable storage medium includes a computer program. When the computer program is run on a computer, the computer is enabled to perform the method according to any one of the possible implementations in the first aspect to the third aspect.

According to a ninth aspect, a chip or a chip system is provided. The chip or the chip system includes a processing circuit, where the processing circuit is configured to perform the method according to any one of the possible implementations in the first aspect to the third aspect.

According to a tenth aspect, a computer program product is provided. The computer program product includes a computer program (or may be referred to as code or instructions). When the computer program is run, a computer is enabled to perform the method according to any one of the possible implementations in the first aspect to the third aspect.

According to an eleventh aspect, a communication system is provided. The communication system includes a terminal, a first intermediate node, and a first node.

The terminal is configured to perform the method according to any one of the possible implementations in the first aspect. The first intermediate node is configured to perform the method according to any one of the possible implementations in the second aspect. The first node is configured to perform the method according to any one of the possible implementations in the third aspect.

### BRIEF DESCRIPTION OF DRAWINGS

FIG. 1 is a diagram of a communication system to which this application is applicable;
FIG. 2 is an example interaction diagram of a method according to this application;
FIG. 3 is an example interaction diagram of a method according to this application;
FIG. 4 is a block diagram of a communication apparatus according to this application; and
FIG. 5 is a block diagram of a communication device according to this application.

### DESCRIPTION OF EMBODIMENTS

Technical solutions in embodiments of this application may be applied to various 3rd generation partnership project (3rd generation partnership project, 3GPP) communication systems, for example, a long term evolution (long term evolution, LTE) system, such as an LTE frequency division duplex (frequency division duplex, FDD) system, or an LTE time division duplex (time division duplex, TDD) system, a 5th generation (5th Generation, 5G) communication system, also referred to as a new radio (new radio, NR) communication system, and a future evolved communication system such as a 6th generation (6th Generation, 6G) communication system.

It should be understood that the term "and/or" in this specification describes only an association relationship between associated objects and represents that three relationships may exist. For example, A and/or B may represent the following three cases: Only A exists, both A and B exist, and only B exists. In addition, a symbol "/" in this application may represent "and/or". For example, A/B represents A and/or B.

It should be understood that, in embodiments of the present invention, "B corresponding to A" indicates that B is associated with A, and B can be determined based on A. However, it should be further understood that determining B based on A does not mean that B is determined based only on A. B may alternatively be determined based on A and/or other information.

"A plurality of" in embodiments of this application refers to two or more.

Descriptions such as "first" and "second" in embodiments of this application are merely used for illustration and distinguishing between described objects, do not represent a sequence or indicate a special limitation on a quantity of described objects in embodiments of this application, and cannot constitute any limitation on embodiments of this application.

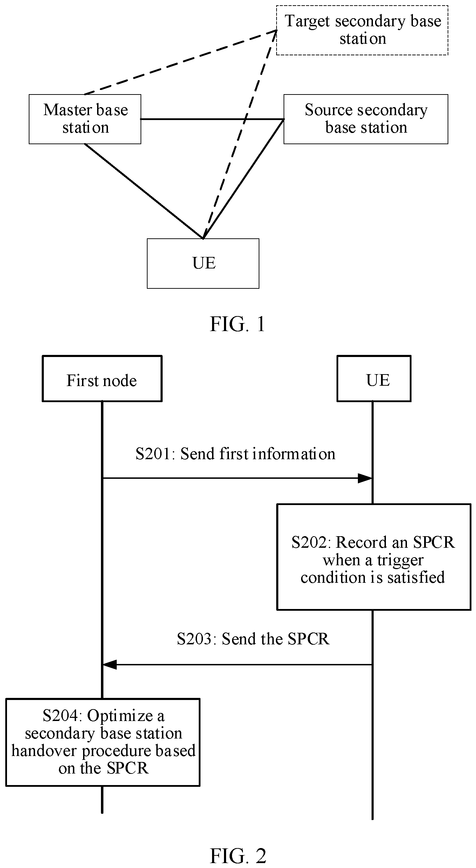

FIG. 1 shows a dual connectivity communication system to which this application is applicable. The system includes UE, a master base station, a source secondary base station, and a target secondary base station.

The dual connectivity communication system may be a new radio dual connectivity (new radio dual connectivity, NR-DC) system. In the system, the master base station is an NR base station connected to a 5G core network, and the secondary base station is an LTE base station.

Alternatively, the dual connectivity communication system may be a next generation (next generation, NG) radio access network (radio access network, RAN)-evolved universal terrestrial radio access (evolved universal terrestrial radio access, E-UTRA)-NR dual connectivity (NG-RAN E-UTRA-NR dual connectivity, NGEN-DC) system. In the system, the master base station is an LTE base station connected to a 5G core network, and the secondary base station is an NR base station.

Alternatively, the dual connectivity communication system may be an E-UTRA-NR dual connectivity (E-UTRA-NR dual connectivity, EN-DC) system. In the system, the master base station is an LTE base station connected to a 4G core network, and the secondary base station is an NR base station.

Alternatively, the dual connectivity communication system may be an NR-E-UTRA dual connectivity (NR-E-UTRA dual connectivity, NE-DC) system. In the system, the master base station is an NR base station connected to a 5G core network, and the secondary base station is an LTE base station.

The foregoing dual connectivity communication systems may be collectively referred to as a multi-radio dual connectivity (multi-radio dual connectivity, MR-DC) communication system.

In the dual connectivity communication system, a group of serving cells associated with the master base station may be referred to as a master cell group (master cell group, MCG). The master cell group includes a primary cell (primary cell, PCell). The master base station may also be referred to as a master node (master node, MN). A group of serving cells associated (associated) with the secondary base station may be referred to as a secondary cell group (secondary cell group, SCG), and a primary cell in the secondary cell group may be referred to as a primary secondary cell (primary SCG cell, PSCell). The secondary base station may also be referred to as a secondary node (secondary node, SN). A control plane connection may be established between the master base station and a core network, and data plane connections may be separately established between the master base station and the core network and between the secondary base station and the core network.

In a secondary base station handover scenario for a terminal, a primary secondary cell managed by the source secondary base station is referred to as an S-PSCell (source PSCell), and a primary secondary cell managed by the target secondary base station is referred to as a T-PSCell (target PSCell).

In this application, the terminal may be various devices that provide voice and/or data connectivity for a user, or may be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer having a wireless transceiver function, a wearable device, an aerospace device, or the like. In embodiments of this application, a chip used in the foregoing device may also be referred to as a terminal. In this application, an example in which the UE is used as the terminal is used for description.

The network node in embodiments of this application may be an access network device such as a base station. The base station may be a base transceiver station (base transceiver station, BTS) in a global system for mobile communications (global system for mobile communications, GSM) system or a code division multiple access (code division multiple access, CDMA) system, or may be a base station in a wideband code division multiple access (wideband code division multiple access, WCDMA) system, or may be an evolved NodeB (evolved NodeB, eNB, or eNodeB) in an LTE system, or a next generation NodeB (next generation NodeB, gNB) in a 5th generation (5th generation, 5G) mobile communication system, a next generation base station in a 6th generation (6th generation, 6G) mobile communication system, a base station in a future mobile communication system, or the like. A specific technology and a specific device form used by the network node are not limited in embodiments of this application. For example, the network node may alternatively be a module or a unit that completes some functions of the base station, for example, may be a central unit (central unit, CU), or may be a distributed unit (distributed unit, DU). The CU and the DU separately complete some protocol stack functions of the base station. In addition, functions of the CU may be implemented by a plurality of entities. For example, functions of a control plane (control plane, CP) and a user plane (user plane, UP) of the CU are separated, to form a CU control plane (CU-CP) and a CU user plane (CU-UP). For example, the CU-CP and the CU-UP may be implemented by different functional entities, and are connected through an E1 interface. The CU-CP and the CU-UP may be coupled to the DU.

A potential failure may occur in a process in which the UE is handed over from the source secondary base station to the target secondary base station. In this application, the potential failure may mean that the UE is successfully handed over from the source secondary base station to the target secondary base station, but there are some problems in the handover process that may cause a handover failure in the future. For example, there is a problem that time in which the UE is handed over from the source secondary base station to the target secondary base station exceeds preset duration. When the potential failure occurs, the UE may be triggered to record an SPCR. The SPCR may include information related to the potential failure, and the information may be referred to as potential failure information.

The foregoing potential failure may be as follows: A potential failure occurs on a communication link between the UE and the master base station, a potential failure occurs on a communication link between the UE and the source secondary base station, or a potential failure occurs on a communication link between the UE and the target secondary base station. A reason why a potential failure occurs on any one of the foregoing communication links may be that signal quality of the communication link is lower than a preset threshold. It may be understood that, if signal quality of the foregoing one or more communication links is poor, the UE may need to wait for signal quality to become better, or may need to make more attempts to access the target secondary base station. Therefore, the time in which the UE is handed over from the source secondary base station to the target secondary base station may exceed the preset duration.

Whether the time in which the UE is handed over from the source secondary base station to the target secondary base station exceeds the preset duration may be reflected by whether preset timer running duration exceeds a threshold.

For ease of understanding, the following describes several timers in this application.

### Timer T304 (referred to as T304 for short below):

Running duration of T304 indicates duration in which the UE does not access the target secondary base station after receiving a secondary base station handover command. If the running duration of T304 is greater than or equal to a threshold 1, the UE determines that a handover failure occurs, that is, the UE determines that access to the target secondary base station fails. If the running duration of T304 is greater than or equal to a threshold 2, the UE determines that a handover failure possibly occurs, and triggers recording of an SPCR. Herein, the threshold 1 is greater than the threshold 2.

### Timer T310 (referred to as T310 for short below):

Running duration of T310 indicates duration in which the UE detects that there is a physical layer problem (physical layer problem) (where the problem is usually that a quantity of consecutive downlink out-of-synchronization indications received exceeds a specific threshold) between the UE and a base station (for example, the source secondary base station or the master base station). After T310 is started, if a radio link is restored during running of T310, the timer T310 is stopped. If the running duration of T310 is greater than or equal to a threshold 3, the UE determines that a radio link failure occurs between the UE and the base station (for example, the source secondary base station or the master base station). If the running duration of T310 is greater than or equal to a threshold 4, the UE determines that a radio link failure possibly occurs between the UE and the base station (for example, the source secondary base station or the master base station), and triggers recording of an SPCR. Herein, the threshold 3 is greater than the threshold 4.

### Timer T312 (referred to as T312 for short below):

T312 is started during the running of T310. Running duration of T312 indicates duration of restoring synchronization between the UE and the base station (for example, the source secondary base station or the master base station). If the running duration of T312 is greater than or equal to a threshold 5, the UE determines that a radio link failure occurs between the UE and the base station (for example, the source secondary base station or the master base station). If the running duration of T312 is greater than or equal to a threshold 6, the UE determines that a radio link failure possibly occurs between the UE and the base station (for example, the source secondary base station or the master base station), and triggers recording of an SPCR. Herein, the threshold 5 is greater than the threshold 6.

In the secondary base station handover process, the master base station, the source secondary base station, and the target secondary base station may all configure, for the UE, a trigger condition for recording the SPCR. For example, both the master base station and the source secondary base station configure a timeout threshold of T312 for the UE. If T312 times out, the UE records the SPCR. However, because the timeout threshold of T312 may be configured by the master base station, or may be configured by the source secondary base station, the UE cannot determine whether the SPCR needs to be sent to the master base station or the source secondary base station. Therefore, the UE may send the recorded SPCR to an incorrect base station.

To resolve the foregoing problem, FIG. 2 shows a method 200 provided in this application. In the method, there is a correspondence between an SPCR recorded by UE and a node that triggers recording of the SPCR, so that the UE can send the SPCR to a correct node.

Specifically, the method 200 includes the following steps.

S201: A first node sends first information. Correspondingly, the UE receives the first information from the first node.

The first information indicates a trigger condition for recording the first report. For example, the first report may be an SPCR, or a name of the first report may be another name. This is not limited in this application. The following uses an example in which the first report is the SPCR for description.

### Case 1:

The first node is a source master base station (referred to as a master base station #1 below) accessed by the UE. The first node may directly send the first information (denoted as first information #1) to the UE. For example, the master base station #1 may send a secondary base station handover command to the UE, where the secondary base station handover command includes the first information #1. The UE may perform a secondary base station handover procedure based on the secondary base station handover command.

For example, the master base station #1 determines to perform RRC reconfiguration on the UE, to send the secondary base station handover command to the UE. For example, when load of the source secondary base station is excessively heavy, the master base station #1 determines to perform RRC reconfiguration on the UE.

A trigger condition #1 for recording the SPCR may be that a potential failure occurs on a communication link between the UE and the master base station #1. For example, the trigger condition #1 may be that T312 times out or T310 times out. It should be understood that the first information #1 includes a timeout threshold of T312 and/or a timeout threshold of T310. For related descriptions of T312 and T310, refer to the foregoing descriptions.

It should be understood that the "source master base station" herein is merely intended to distinguish from a "target master base station" in the following, and does not mean that the master base station accessed by the UE is definitely handed over, or even if the UE performs a master base station handover procedure, the source master base station and the target master base station may be a same base station.

### Case 2:

The first node is a target secondary base station. The first node may send the first information (denoted as first information #2) to the UE via a master base station #1 accessed by the UE. For example, the target secondary base station sends a radio resource control (radio resource control, RRC) reconfiguration message to the master base station #1, where the first information #2 is included in the RRC reconfiguration message in a form of a container (container). Then, the master base station #1 sends a secondary base station handover command to the UE, where the first information #2 is included in the secondary base station handover command in a form of a container.

A trigger condition #2 for recording the SPCR may be that a potential failure occurs on a communication link between the UE and the target secondary base station. For example, the trigger condition #2 may be that T304 times out. It should be understood that the first information #2 includes a timeout threshold of T304. For related descriptions of T304, refer to the foregoing descriptions.

### Case 3:

The first node is a source secondary base station accessed by the UE. The first node may send the first information (denoted as first information #3) to the UE via a master base station #1 accessed by the UE. For example, the source secondary base station sends an RRC reconfiguration message to the master base station #1, where the first information #3 is included in the RRC reconfiguration message in a form of a container (container). Then, the master base station #1 sends a secondary base station handover command to the UE, where the first information #3 is included in the secondary base station handover command in a form of a container.

A trigger condition #3 for recording the SPCR may be that a potential failure occurs on a communication link between the UE and the source secondary base station. For example, the trigger condition #3 may be that T312 times out or T310 times out. It should be understood that the first information #3 includes a timeout threshold of T312 and/or a timeout threshold of T310.

It should be understood that the timeout threshold of T312 in the trigger condition #1 may be different from or the same as the timeout threshold of T312 in the trigger condition #3. In other words, the timeout threshold of T312 configured by the master base station #1 may be different from or the same as the timeout threshold of T312 configured by the source secondary base station.

Similarly, the timeout threshold of T310 in the trigger condition #1 may be different from or the same as the timeout threshold of T310 in the trigger condition #3.

It should be understood that one or more of the foregoing three cases may occur. For example, the master base station #1 sends the secondary base station handover command to the UE, where the secondary base station handover command includes one or more of the first information #1, the first information #2, and the first information #3, so that the UE may obtain one or more of the trigger condition #1 to the trigger condition #3.

Optionally, step S201 is performed before the UE performs secondary base station handover. The UE may first obtain the first information from the first node. Subsequently the master base station #1 may send the secondary base station handover command to the UE, and the UE performs the secondary base station handover procedure based on the secondary base station handover command.

S202: The UE records the SPCR when the trigger condition is satisfied, where there is a correspondence between the SPCR and the first node.

The SPCR includes information of the UE in the secondary base station handover procedure. For example, the information includes one or more of the following:

a cell identifier (cell ID) of an S-PSCell managed by the source secondary base station, a cell ID of a T-PSCell managed by the target secondary base station, random access information of the target secondary base station, a channel measurement amount of a neighboring cell, a type of a timer that times out, and a time interval between a last time of data transmission between the UE and the source secondary base station and a first time of data transmission between the UE and the target secondary base station. It should be understood that the neighboring cell may be a neighboring cell of the S-PSCell managed by the source secondary base station and/or a neighboring cell of the T-PSCell managed by the target secondary base station.

The foregoing information may be related to a potential failure in a process in which the UE is handed over to the target secondary base station, and may also be referred to as potential failure information.

In a manner, the SPCR may include identification information of the first node. The UE records the identification information of the first node in the SPCR.

In another manner, identification information of the first node is information independent of the SPCR.

Optionally, the UE sends a message including the identification information of the first node and the SPCR. Optionally, the identification information of the first node and the SPCR may alternatively be included in different messages. The SPCR may be used as a container (container), the SPCR may not include the identification information of the first node, and the UE records the identification information of the first node as an independent information element outside the SPCR. It should be understood that, if the identification information of the first node is recorded outside the SPCR, at least one intermediate node in the following may obtain the identification information of the first node without parsing the SPCR, to reduce a sending delay of the SPCR. In addition, a case in which the at least one intermediate node in the following cannot parse the SPCR due to different standards of base stations can be avoided.

In conclusion, in the foregoing two manners, the UE not only records the SPCR, but also records the identification information of the first node corresponding to the SPCR, so that the SPCR can be associated with the first node. Because the SPCR is triggered by a trigger condition sent by the first node to be recorded, and the SPCR may include potential failure information related to the first node, the first node may be considered as a destination node corresponding to the SPCR. In other words, finally, the SPCR may be sent to the first node, and the first node optimizes a mobility parameter based on the SPCR, to resolve a potential failure problem.

The identification information of the first node represents a source of the trigger condition corresponding to the SPCR. The source may be the foregoing master base station #1, the source secondary base station, or the target secondary base station.

For example, the identification information of the first node may be a cell global identifier (cell global identifier, CGI) or a closed access group (closed access group, CAG) identifier.

A format of the SPCR corresponds to a standard of the first node used as the destination node, so that the destination node can parse the SPCR. It may be understood that if a standard of a network node that receives the SPCR does not correspond to the format of the SPCR, the network node cannot parse the SPCR. The format of the SPCR may be a format of radio resource control (radio resource control, RRC) layer signaling that carries the first report. For example, designs of information elements in RRC layer signaling in different formats may be different. For example, if the first node is an LTE base station, the SPCR is in an LTE format. If the first node is an NR base station, the SPCR is in an NR format.

S203: The UE sends the SPCR to the first node. Correspondingly, the first node receives the SPCR from the UE.

For example, if the first node is the master base station #1, the UE sends an SPCR #1 to the master base station #1.

For another example, if the first node is the target secondary base station, the UE sends an SPCR #2 to the target secondary base station.

For another example, if the first node is the source secondary base station, the UE sends an SPCR #3 to the source secondary base station.

A process of transmitting the SPCR is described in detail subsequently.

S204: The first node optimizes the secondary base station handover procedure based on the SPCR.

For example, the SPCR includes the channel measurement amount of the neighboring cell, and the first node may select, based on the channel measurement amount of the neighboring cell, a cell with better channel quality for subsequent secondary base station handover by another UE. For example, based on the SPCR, the master base station #1 determines that time of access of the UE to the target secondary base station is excessively long, and a channel measurement result of a neighboring base station is better than a channel measurement result of the target secondary base station. In this case, for UE that performs secondary base station handover later, the master base station #1 may preferentially hand over the UE to the neighboring base station with the better channel measurement result.

For another example, if the master base station #1 or the source secondary base station determines, based on the SPCR, that downlink out-of-synchronization already occurs between the UE and the source secondary base station for a plurality of times before the UE successfully accesses the target secondary base station because handover time is excessively late, the master base station #1 or the source secondary base station may advance time for performing secondary base station handover by another UE.

For another example, the target secondary base station determines, based on the SPCR, that a potential failure is caused because handover time is excessively early, and the target secondary base station may send indication information to the master base station #1, to delay time for performing secondary base station handover by another UE.

According to the method in this application, the UE can correctly send the SPCR to the first node in a timely manner, so that the SPCR can be effectively used to optimize a mobility parameter, to improve SPCR utilization and enhance a mobility optimization effect. In addition, based on the mobility parameter optimized based on the first node, a success rate of a subsequent secondary base station handover procedure can be improved, and continuity of dual connectivity communication can be ensured.

The following describes manners in which the UE sends the SPCR to the first node in S203 in detail.

### Manner 1:

The UE directly sends the SPCR to the first node.

### Case 1:

If the trigger condition #1 is satisfied, the UE records the SPCR #1 and identification information (for example, a CGI of a PCell managed by the master base station #1) of the master base station #1.

In other words, the SPCR #1 corresponds to the master base station #1, and the SPCR #1 is to be finally sent to the master base station #1.

It should be understood that, in Case 1, the UE may record the identification information of the master base station #1 in the SPCR #1, or record the identification information as independent information outside the SPCR #1. This is not limited.

The UE sends the SPCR #1 to the master base station #1 based on the recorded identification information of the master base station #1.

### Case 2:

If the trigger condition #2 is satisfied, the UE records the SPCR #2 and identification information (for example, a CGI of the T-PSCell managed by the target secondary base station) of the target secondary base station.

It should be understood that, in Case 2, the UE may record the identification information of the target secondary base station in the SPCR #2, or record the identification information as independent information outside the SPCR #2. This is not limited.

The UE sends the SPCR #2 to the target secondary base station based on the recorded identification information of the target secondary base station.

### Manner 2:

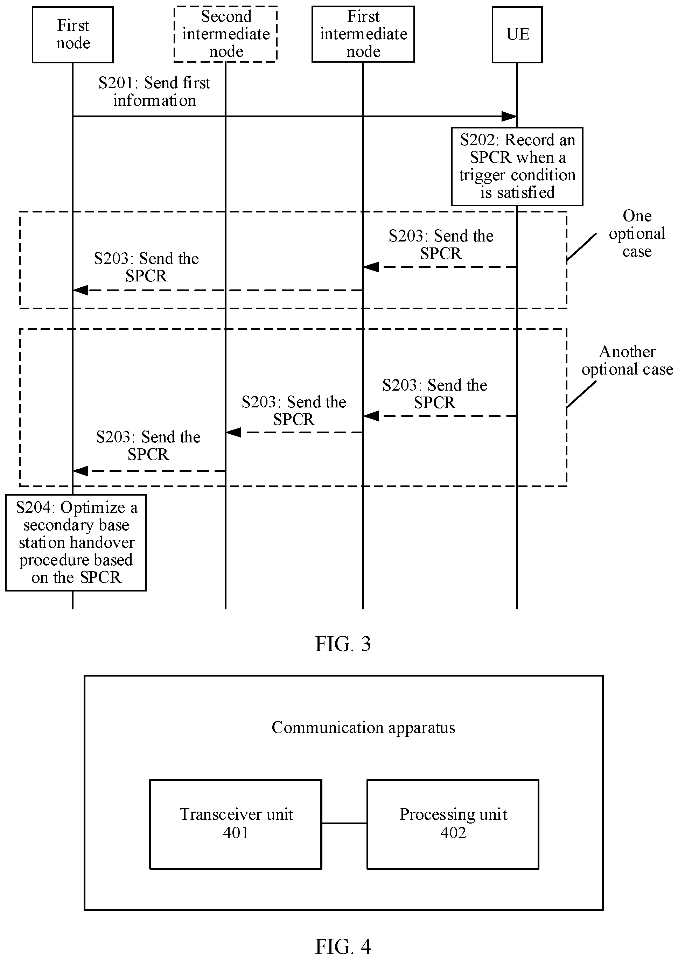

As shown in FIG. 3, the UE sends the SPCR to the first node via the at least one intermediate node. The at least one intermediate node includes a first intermediate node, and optionally, further includes a second intermediate node.

In this case, the UE further sends the identification information of the first node to the first intermediate node. It should be understood that, if the at least one intermediate node includes the second intermediate node, the UE further sends identification information of the second intermediate node to the first intermediate node.

The first intermediate node is a node accessed by the UE.

In an implementation, the UE determines, based on the first intermediate node and the standard of the first node, whether the first intermediate node supports a RAT corresponding to the SPCR. In other words, the UE determines whether the first intermediate node can parse the SPCR. Specifically, if the first intermediate node and the first node are base stations of a same standard, the first intermediate node supports the RAT corresponding to the SPCR, that is, the first intermediate node can parse the SPCR. If the first intermediate node and the first node are base stations of different standards, the first intermediate node does not support the RAT corresponding to the SPCR, that is, the first intermediate node cannot parse the SPCR.

For example, if both the first intermediate node and the first node are LTE base stations or NR base stations, the first intermediate node and the first node are base stations of a same standard. If one of the first intermediate node and the first node is an LTE base station and the other is an NR base station, the first intermediate node and the first node are base stations of different standards. If one of the first intermediate node and the first node is an NR base station and the other is a base station in a future 6G system, the first intermediate node and the first node are base stations of different standards.

If the UE determines that the first intermediate node can parse the SPCR, the SPCR includes the identification information of the first node. In other words, when recording the SPCR in S204, the UE also records the identification information of the first node in the SPCR, or the UE may record the identification information of the first node as the information independent of the SPCR.

If the UE determines that the first intermediate node cannot parse the SPCR, the UE may record the identification information of the first node as the information independent of the SPCR, that is, record the identification information of the first node outside the SPCR. For example, the SPCR is used as a container, and the identification information of the first node is used as an information element not included in the container. Further, the UE may send the message including the container and the identification information of the first node to the first intermediate node.

The first intermediate node may be the master base station #1, the target secondary base station, or the master base station #2 (an example of the target master base station). The master base station #2 is a master base station that is accessed by the UE after the UE is handed over from the master base station (that is, the UE is handed over from the master base station #1 to the master base station #2).

Manner 2 is described below with reference to different scenarios.

## Scenario 1: In an NR-DC scenario, the master base station #1 is an NR base station connected to a 5G core network, and the source secondary base station and the target secondary base station are NR base stations.

a: The first intermediate node is the master base station #1.

If the trigger condition #3 is satisfied, the UE records the SPCR #3 in an NR format. Because a standard of the source secondary base station is the same as that of the master base station #1, the UE determines that the master base station #1 can parse the SPCR #3, and in S202, the UE may record identification information of the source secondary base station in the SPCR #3. Certainly, the UE may alternatively record identification information of the source secondary base station outside the SPCR #3.

For example, the identification information of the source secondary base station may be a CGI of the S-PSCell managed by the source secondary base station.

An example in which the SPCR #3 includes the identification information of the source secondary base station is used. A specific sending process includes the following steps:
Step 1: The UE sends the SPCR #3 to the master base station #1.
Step 2: The master base station #1 sends the SPCR #3 to the source secondary base station based on the identification information of the source secondary base station included in the SPCR #3.

Specifically, the UE and the master base station #1 may send the SPCR #3 by using one or more messages. This is not limited in this application.

b: The first intermediate node is the master base station #2, and the master base station #2 is an NR base station.

In this case, because a standard of the master base station #2 is the same as that of the first node, the UE determines that the master base station #2 can parse the SPCR, and the UE may record the identification information of the first node in the SPCR. Certainly, the UE may alternatively record the identification information of the first node outside the SPCR. The following uses an example in which the identification information of the first node is recorded in the SPCR for description.

Example 1: If the trigger condition #1 is satisfied, the UE records the SPCR #1. The SPCR #1 may include identification information of the master base station #1.

The UE sends the SPCR #1 to the master base station #2. Further, the master base station #2 sends the SPCR #1 to the master base station #1 based on the identification information of the master base station #1 in the SPCR #1. For example, the master base station #2 sends the SPCR #1 to the master base station #1 through an Xn interface.

Example 2: If the trigger condition #2 is satisfied, the UE records the SPCR #2. The SPCR #2 may include identification information of the target secondary base station.

The UE sends the SPCR #2 to the master base station #2. Further, the master base station #2 sends the SPCR #2 to the target secondary base station based on the identification information of the target secondary base station in the SPCR #2. For example, the master base station #2 sends the SPCR #2 to the target secondary base station through an Xn interface.

Example 3: If the trigger condition #3 is satisfied, the UE records the SPCR #3. The SPCR #3 may include identification information of the source secondary base station.

The UE sends the SPCR #3 to the master base station #2. Further, the master base station #2 sends the SPCR #3 to the source secondary base station based on the identification information of the source secondary base station in the SPCR #3. For example, the master base station #2 sends the SPCR #3 to the source secondary base station through an Xn interface.

Example 4: If the trigger condition #2 is satisfied, the UE records the SPCR #2. The SPCR #2 includes identification information of the target secondary base station.

The UE sends the SPCR #2 to the target secondary base station via two intermediate nodes, which are respectively the master base station #2 (the first intermediate node) and the master base station #1 (the second intermediate node).

A specific sending process includes the following steps.

Step 1: The UE sends the SPCR #2 to the master base station #2.

In a first case, the SPCR #2 may include the identification information of the target secondary base station, identification information of the master base station #1, and indication information, where the indication information indicates that the master base station #1 is an intermediate node for transmitting the SPCR #2, and the target secondary base station is a destination node corresponding to the SPCR #2. In other words, the master base station #2 may be notified of a specific intermediate node or a specific destination node in a direct (explicit) indication manner.

Alternatively, the indication information indicates that the master base station #1 is an intermediate node for transmitting the SPCR #2. In this case, a rule may be pre-configured in the UE and the master base station #2, and the target secondary base station is considered as a destination node corresponding to the SPCR #2 by default.

Alternatively, the indication information indicates that the target secondary base station is a destination node corresponding to the SPCR #2. In this case, a rule may be pre-configured in the UE and the master base station #2, and the master base station #1 is considered as an intermediate node for transmitting the SPCR #2 by default.

In a second case, the UE does not send the indication information to the master base station #2. Rules for determining an intermediate node and a destination node are pre-configured in the UE and the master base station #2, and the master base station #2 is notified of a specific intermediate node and a specific destination node in an indirect (implicit) indication manner.

For example, the intermediate node and the destination node are determined according to a sequence of the identification information of the target secondary base station and identification information of the master base station #1 in a group of bits. For example, in the group of bits, the first five bits indicate an intermediate node for transmitting the SPCR #2, and the last five bits indicate a destination node corresponding to the SPCR #2.

For another example, the following information may be pre-configured in the UE and the master base station #2: A base station identifier included in the SPCR is an identifier of the destination node, and a base station identifier not included in the SPCR is an identifier of the intermediate node. In other words, the identification information of the master base station #1 is not included in the SPCR #2, and the identification information of the target secondary base station is included in the SPCR #2.

Specifically, the UE may send the foregoing information to the master base station #2 by using one or more messages. This is not limited in this application.

Step 2: The master base station #2 sends the SPCR #2 to the master base station #1.

Step 3: The master base station #1 sends the SPCR #2 to the target secondary base station based on the identification information of the target secondary base station in the SPCR #2. For example, the master base station #1 sends the SPCR #2 to the target secondary base station through an Xn interface.

Example 5: Because the trigger condition #3 is satisfied, the UE records the SPCR #3. The SPCR #3 includes identification information of the source secondary base station.

The UE sends the SPCR #3 to the source secondary base station via two intermediate nodes, which are respectively the master base station #2 and the master base station #1.

A specific sending process includes the following steps.

Step 1: The UE sends the SPCR #3 and identification information of the master base station #1 to the master base station #2. The SPCR #3 includes the identification information of the source secondary base station.

Similar to Example 4, to indicate that the master base station #1 is an intermediate node for sending the SPCR #3 and the source secondary base station is a destination node corresponding to the SPCR #3, there may be two manners: a direct indication manner and an indirect indication manner. Details are not described herein.

Step 2: The master base station #2 sends the SPCR #3 to the master base station #1.

Step 3: The master base station #1 sends the SPCR #3 to the source secondary base station based on the identification information of the source secondary base station in the SPCR #3. For example, the master base station #1 sends the SPCR #3 to the source secondary base station through an Xn interface.

c: The first intermediate node is the master base station #2, and the master base station #2 is not an NR base station. For example, the master base station #2 is an LTE base station.

In this case, because a standard of the master base station #2 is different from that of the first node, the UE determines that the master base station #2 cannot parse the SPCR, and the UE may record the identification information of the first node outside the SPCR.

Example 1: If the trigger condition #1 is satisfied, the UE records the SPCR #1 and identification information of the master base station #1.

The UE sends the SPCR #1 and the identification information of the master base station #1 to the master base station #2. Further, the master base station #2 sends the SPCR #1 to the master base station #1 based on the identification information of the master base station #1.

The UE may send the SPCR #1 and the identification information of the master base station #1 to the master base station #2 by using one or more messages. This is not limited in this application.

Example 2: If the trigger condition #2 is satisfied, the UE records the SPCR #2 and identification information of the target secondary base station.

The UE sends the SPCR #2 and the identification information of the target secondary base station to the master base station #2. Further, the master base station #2 sends the SPCR #2 to the target secondary base station based on the identification information of the target secondary base station.

Example 3: If the trigger condition #3 is satisfied, the UE records the SPCR #3 and identification information of the source secondary base station.

The UE sends the SPCR #3 and the identification information of the source secondary base station to the master base station #2. Further, the master base station #2 sends the SPCR #3 to the source secondary base station based on the identification information of the source secondary base station.

Example 4: If the trigger condition #2 is satisfied, the UE records the SPCR #2 and identification information of the target secondary base station.

The UE sends the SPCR #2 to the target secondary base station via two intermediate nodes, which are respectively the master base station #2 and the master base station #1.

A specific sending process includes the following steps.

Step 1: The UE sends the SPCR #2, the identification information of the target secondary base station, and identification information of the master base station #1 to the master base station #2. The identification information of the target secondary base station may not be included in the SPCR #2, or may be included in the SPCR #2. The identification information of the master base station #1 is not included in the SPCR #2.

In addition, to indicate that the master base station #1 is an intermediate node for transmitting the SPCR #2 and the target secondary base station is a destination node corresponding to the SPCR #2, a direct indication manner or an indirect indication manner may be used. For details, refer to the foregoing descriptions.

Step 2: The master base station #2 sends the SPCR #2 and the identification information of the target secondary base station to the master base station #1.

Step 3: The master base station #1 sends the SPCR #2 to the target secondary base station based on the identification information of the target secondary base station.

Example 5: If the trigger condition #3 is satisfied, the UE records the SPCR #3 and identification information of the source secondary base station.

The UE sends the SPCR #3 to the source secondary base station via two intermediate nodes, which are respectively the master base station #2 and the master base station #1.

A specific sending process includes the following steps.

Step 1: The UE sends the SPCR #3, the identification information of the source secondary base station, and identification information of the master base station #1 to the master base station #2. The identification information of the source secondary base station may not be included in the SPCR #3, or may be included in the SPCR #3. The identification information of the master base station #1 is not included in the SPCR #3.

In addition, to indicate that the master base station #1 is an intermediate node for transmitting the SPCR #3 and the source secondary base station is a destination node corresponding to the SPCR #3, a direct indication manner or an indirect indication manner may be used. For details, refer to the foregoing descriptions.

Step 2: The master base station #2 sends the SPCR #3 and the identification information of the source secondary base station to the master base station #1.

Step 3: The master base station #1 sends the SPCR #3 to the source secondary base station based on the identification information of the source secondary base station.

## Scenario 2: In an NGEN-DC scenario, the master base station #1 is an LTE base station connected to a 5G core network, and the source secondary base station and the target secondary base station are NR base stations.

a: The first intermediate node is the target secondary base station.

Example 1: If the trigger condition #1 is satisfied, the UE records the SPCR #1 in an

LTE format. Because a standard of the target secondary base station is different from that of the master base station #1, the UE determines that the target secondary base station cannot parse the SPCR #1, and in S202, the UE records identification information of the master base station #1 as independent information.

A specific sending process includes the following steps:

Step 1: The UE sends the SPCR #1 and the identification information of the master base station #1 to the target secondary base station.

Step 2: The target secondary base station sends the SPCR #1 to the master base station #1 based on the identification information of the master base station #1. For example, the target secondary base station sends the SPCR #1 to the master base station #1 through an X2 interface or a core network.

Example 2: If the trigger condition #3 is satisfied, the UE records the SPCR #3 in an NR format. Because a standard of the target secondary base station is the same as that of the source secondary base station, the UE determines that the target secondary base station can parse the SPCR #3, and in S202, the UE may record identification information of the source secondary base station in the SPCR #3. Certainly, the UE may alternatively record identification information of the source secondary base station as independent information outside the SPCR #3.

An example in which the SPCR #3 includes the identification information of the source secondary base station is used. A specific sending process includes the following steps:
Step 1: The UE sends the SPCR #3 to the target secondary base station.
Step 2: The target secondary base station sends the SPCR #3 to the source secondary base station based on the identification information of the source secondary base station in the SPCR #3. For example, the target secondary base station sends the SPCR #3 to the source secondary base station through an Xn interface or a core network.

b: The first intermediate node is the master base station #1.

Example 1: If the trigger condition #2 is satisfied, the UE records the SPCR #2 in an NR format. Because a standard of the master base station #1 is different from that of the target secondary base station, the UE determines that the master base station #1 cannot parse the SPCR #2, and in S202, the UE records identification information of the target secondary base station as independent information.

A specific sending process includes the following steps:
Step 1: The UE sends the SPCR #2 and the identification information of the target secondary base station to the master base station #1.
Step 2: The master base station #1 sends the SPCR #2 to the target secondary base station based on the identification information of the target secondary base station. For example, the master base station #1 sends the SPCR #2 to the target secondary base station through an X2 interface or a core network.

Example 2: If the trigger condition #3 is satisfied, the UE records the SPCR #3 in an NR format. Because a standard of the master base station #1 is different from that of the source secondary base station, the UE determines that the master base station #1 cannot parse the SPCR #3, and in S202, the UE records identification information of the source secondary base station as independent information.

A specific sending process includes the following steps:
Step 1: The UE sends the SPCR #3 and the identification information of the source secondary base station to the master base station #1.
Step 2: The master base station #1 sends the SPCR #3 to the source secondary base station based on the identification information of the source secondary base station. For example, the master base station #1 sends the SPCR #3 to the source secondary base station through an X2 interface or a core network.

c: The first intermediate node is the master base station #2, and the master base station #2 is an NR base station.

Example 1: If the trigger condition #1 is satisfied, the UE records the SPCR #1 in an LTE format. Because a standard of the master base station #2 is different from that of the master base station #1, the UE determines that the master base station #2 cannot parse the SPCR #1, and in S202, the UE records identification information of the master base station #1 as independent information.

A specific sending process includes the following steps:
Step 1: The UE sends the SPCR #1 and the identification information of the master base station #1 to the master base station #2.
Step 2: The master base station #2 sends the SPCR #1 to the master base station #1 based on the identification information of the master base station #1. In other words, the master base station #2 does not read content in the SPCR #1, and sends the SPCR #1 to the master base station #1 based on the identification information of the master base station #1 not included in the SPCR #1. For example, the master base station #2 sends the SPCR #1 to the master base station #1 through an X2 interface or a core network.

Example 2: If the trigger condition #2 is satisfied, the UE records the SPCR #2 in an NR format. Because a standard of the master base station #2 is the same as that of the target secondary base station, the UE determines that the master base station #2 can parse the SPCR #2, and in S202, the UE may record identification information of the target secondary base station in the SPCR #2. Certainly, the UE may alternatively record identification information of the target secondary base station as independent information outside the SPCR #2.

An example in which the SPCR #2 includes the identification information of the target secondary base station is used. A specific sending process includes the following steps:
Step 1: The UE sends the SPCR #2 to the master base station #2.
Step 2: The master base station #2 sends the SPCR #2 to the target secondary base station based on the identification information of the target secondary base station in the SPCR #2. For example, the master base station #2 sends the SPCR #2 to the target secondary base station through an Xn interface or a core network.

Example 3: If the trigger condition #2 is satisfied, the UE records the SPCR #2 in an NR format. The UE sends the SPCR #2 to the target secondary base station via two intermediate nodes, which are respectively the master base station #2 and the master base station #1.

For example, when there is no direct interface between the master base station #2 and the target secondary base station, the following manner may be used for sending.

A specific sending process includes the following steps.

Step 1: The UE sends the SPCR #2, identification information of the master base station #1, and identification information of the target secondary base station to the master base station #2.

Because a standard of the master base station #2 is the same as that of the target secondary base station, the UE determines that the master base station #2 can parse the SPCR #2.

In a possible manner, the identification information of the master base station #1 and the identification information of the target secondary base station may be included in the SPCR #2.

In another possible manner, the identification information of the master base station #1 and the identification information of the target secondary base station may not be included in the SPCR #2.

In addition, to indicate that the master base station #1 is an intermediate node for transmitting the SPCR #2 and the target secondary base station is a destination node corresponding to the SPCR #2, a direct indication manner or an indirect indication manner may be used. For details, refer to the foregoing descriptions.

Step 2: The master base station #2 sends the SPCR #2 and the identification information of the target secondary base station to the master base station #1, where the identification information of the target secondary base station is not included in the SPCR #2.

Optionally, if the UE sends the SPCR #2 to the master base station #2 in a manner in which the identification information of the target secondary base station is included in the SPCR #2, because a standard of the master base station #1 is different from that of the target secondary base station, the master base station #2 determines that the master base station #1 cannot parse the SPCR #2. Further, before step 2, the master base station #2 obtains the identification information of the target secondary base station from the SPCR #2.

Step 3: The master base station #1 sends the SPCR #2 to the target secondary base station based on the identification information of the target secondary base station.

Example 4: If the trigger condition #3 is satisfied, the UE records the SPCR #3 in an NR format. Because a standard of the master base station #2 is the same as that of the source secondary base station, the UE determines that the master base station #2 can parse the SPCR #3, and in S202, the UE may record identification information of the source secondary base station in the SPCR #3. Certainly, the UE may alternatively record identification information of the source secondary base station as independent information outside the SPCR #3.

An example in which the SPCR #3 includes the identification information of the source secondary base station is used. A specific sending process includes the following steps:
Step 1: The UE sends the SPCR #3 to the master base station #2.
Step 2: The master base station #2 sends the SPCR #3 to the source secondary base station based on the identification information of the source secondary base station in the SPCR #3. For example, the master base station #2 sends the SPCR #3 to the source secondary base station through an Xn interface or a core network.

Example 5: If the trigger condition #3 is satisfied, the UE records the SPCR #3 in an NR format. The UE sends the SPCR #3 to the source secondary base station via two intermediate nodes, which are respectively the master base station #2 and the master base station #1.

For example, when there is no direct interface between the master base station #2 and the source secondary base station, the following manner may be used for sending.

A specific sending process includes the following steps.

Step 1: The UE sends the SPCR #3, identification information of the master base station #1, and identification information of the source secondary base station to the master base station #2.

Because a standard of the master base station #2 is the same as that of the source secondary base station, the UE determines that the master base station #2 can parse the SPCR #3.

In a possible manner, the identification information of the master base station #1 and the identification information of the source secondary base station may be included in the SPCR #3.

In another possible manner, the identification information of the master base station #1 and the identification information of the source secondary base station may not be included in the SPCR #3.

In addition, to indicate that the master base station #1 is an intermediate node for transmitting the SPCR #3 and the source secondary base station is a destination node corresponding to the SPCR #3, a direct indication manner or an indirect indication manner may be used. For details, refer to the foregoing descriptions.

Step 2: The master base station #2 sends the SPCR #3 and the identification information of the source secondary base station to the master base station #1. The identification information of the source secondary base station is not included in the SPCR #3.

Optionally, if the UE sends the SPCR #3 to the master base station #2 in a manner in which the identification information of the source secondary base station is included in the SPCR #3, because a standard of the master base station #1 is different from that of the source secondary base station, the master base station #2 determines that the master base station #1 cannot parse the SPCR #3. Further, before step 2, the master base station #2 obtains the identification information of the source secondary base station from the SPCR #3.

Step 3: The master base station #1 sends the SPCR #3 to the source secondary base station based on the identification information of the source secondary base station.

d: The first intermediate node is the master base station #2, and the master base station #2 is an LTE base station.

Example 1: If the trigger condition #1 is satisfied, the UE records the SPCR #1 in an LTE format. Because a standard of the master base station #2 is the same as that of the master base station #1, the UE determines that the master base station #2 can parse the SPCR #1, and in S202, the UE may record identification information of the master base station #1 in the SPCR #1. Certainly, the UE may alternatively record identification information of the master base station #1 as independent information outside the SPCR #1.

An example in which the SPCR #1 includes the identification information of the master base station #1 is used. A specific sending process includes the following steps:
Step 1: The UE sends the SPCR #1 to the master base station #2.
Step 2: The master base station #2 sends the SPCR #1 to the master base station #1 based on the identification information of the master base station #1 in the SPCR #1. For example, the master base station #2 sends the SPCR #1 to the master base station #1 through an Xn interface or a core network.

Example 2: If the trigger condition #2 is satisfied, the UE records the SPCR #2 in an NR format. Because a standard of the master base station #2 is different from that of the target secondary base station, the UE determines that the master base station #2 cannot parse the SPCR #2, and in S202, the UE records identification information of the target secondary base station as independent information.

A specific sending process includes the following steps:
Step 1: The UE sends the SPCR #2 and the identification information of the target secondary base station to the master base station #2.
Step 2: The master base station #2 sends the SPCR #2 to the target secondary base station based on the identification information of the target secondary base station. In other words, the master base station #2 does not read content in the SPCR #2. For example, the master base station #2 sends the SPCR #2 to the target secondary base station through an X2 interface or a core network.

In addition, in another manner, the UE may alternatively send the SPCR #2 to the target secondary base station via the master base station #2 and the master base station #1. For details, refer to the foregoing descriptions.

Example 3: If the trigger condition #3 is satisfied, the UE records the SPCR #3 in an NR format. Because a standard of the master base station #2 is different from that of the source secondary base station, the UE determines that the master base station #2 cannot parse the SPCR #3, and in S202, the UE records identification information of the source secondary base station as independent information.

A specific sending process includes the following steps:
Step 1: The UE sends the SPCR #3 and the identification information of the source secondary base station to the master base station #2.
Step 2: The master base station #2 sends the SPCR #3 to the source secondary base station based on the identification information of the source secondary base station. In other words, the master base station #2 does not read content in the SPCR #3. For example, the master base station #2 sends the SPCR #3 to the source secondary base station through an X2 interface or a core network.

In addition, in another manner, the UE may alternatively send the SPCR #3 to the source secondary base station via the master base station #2 and the master base station #1. For details, refer to the foregoing descriptions.

## Scenario 3: In an EN-DC scenario, the master base station #1 is an LTE base station connected to a 4G core network, and the source secondary base station and the target secondary base station are NR base stations.

a: The first intermediate node is the target secondary base station.

Example 1: If the trigger condition #1 is satisfied, the UE records the SPCR #1 in an LTE format. Because a standard of the target secondary base station is different from that of the master base station #1, the UE determines that the target secondary base station cannot parse the SPCR #1, and in S202, the UE records identification information of the master base station #1 as independent information.

A specific sending process includes the following steps:
Step 1: The UE sends the SPCR #1 and the identification information of the master base station #1 to the target secondary base station.
Step 2: The target secondary base station sends the SPCR #1 to the master base station #1 based on the identification information of the master base station #1. For example, the target secondary base station sends the SPCR #1 to the master base station #1 through an X2 interface.

Example 2: If the trigger condition #3 is satisfied, the UE records the SPCR #3 in an NR format.

In a manner, because a standard of the target secondary base station is the same as that of the source secondary base station, the UE determines that the target secondary base station can parse the SPCR #3, and in S202, the UE may record identification information of the source secondary base station in the SPCR #3.

The UE sends the SPCR #3 to the source secondary base station via two intermediate nodes, which are respectively the target secondary base station and the master base station #1. A specific sending process includes the following steps.

Step 1: The UE sends the SPCR #3 and identification information of the master base station #1 to the target secondary base station.

Because the target secondary base station can parse the SPCR #3, the SPCR #3 may include the identification information of the master base station #1, or the identification information of the master base station #1 may not be included in the SPCR #3.

In addition, to indicate that the master base station #1 is an intermediate node for transmitting the SPCR #3 and the source secondary base station is a destination node corresponding to the SPCR #3, a direct indication manner or an indirect indication manner may be used. For details, refer to the foregoing descriptions.

Step 2: Because a standard of the master base station #1 is different from that of the source secondary base station, the target secondary base station determines that the master base station #1 cannot parse the SPCR #3.

Step 3: The target secondary base station obtains the identification information of the source secondary base station from the SPCR #3.

Step 4: The target secondary base station sends the SPCR #3 and the identification information of the source secondary base station to the master base station #1. The identification information of the source secondary base station is information independent of the SPCR #3.

In this step, the SPCR #3 sent by the target secondary base station to the master base station #1 may retain the identification information of the source secondary base station, or the target secondary base station may delete the identification information of the source secondary base station from the SPCR #3.

Step 5: The master base station #1 sends the SPCR #3 to the source secondary base station based on the identification information of the source secondary base station.

In another manner, in S202, the UE records the identification information of the source secondary base station as independent information outside the SPCR #3. A specific sending process includes the following steps.

Step 1: The UE sends the SPCR #3, identification information of the master base station #1, and the identification information of the source secondary base station to the target secondary base station.

For example, the identification information of the master base station #1 may not be included in the SPCR #3.

In addition, to indicate that the master base station #1 is an intermediate node for transmitting the SPCR #3 and the source secondary base station is a destination node corresponding to the SPCR #3, a direct indication manner or an indirect indication manner may be used. For details, refer to the foregoing descriptions.

Step 2: The target secondary base station sends the SPCR #3 and the identification information of the source secondary base station to the master base station #1.

Step 3: The master base station #1 sends the SPCR #3 to the source secondary base station based on the identification information of the source secondary base station.

In a possible case, if there is no direct interface between the target secondary base station and the source secondary base station, the UE may send the SPCR to the source secondary base station via the target secondary base station and the master base station #1.

b: The first intermediate node is the master base station #1.

Example 1: If the trigger condition #2 is satisfied, the UE records the SPCR #2 in an NR format. Because a standard of the master base station #1 is different from that of the target secondary base station, the UE determines that the master base station #1 cannot parse the SPCR #2, and in S202, the UE records identification information of the target secondary base station as independent information.

A specific sending process includes the following steps:
Step 1: The UE sends the SPCR #2 and the identification information of the target secondary base station to the master base station #1.
Step 2: The master base station #1 sends the SPCR #2 to the target secondary base station based on the identification information of the target secondary base station. For example, the master base station #1 sends the SPCR #2 to the target secondary base station through an X2 interface or a core network.

Example 2: If the trigger condition #3 is satisfied, the UE records the SPCR #3 in an NR format. Because a standard of the master base station #1 is different from that of the source secondary base station, the UE determines that the master base station #1 cannot parse the SPCR #3, and in S202, the UE records identification information of the source secondary base station as independent information.

A specific sending process includes the following steps:
Step 1: The UE sends the SPCR #3 and identification information of the source secondary base station to the master base station #1.
Step 2: The master base station #1 sends the SPCR #3 to the source secondary base station based on the identification information of the source secondary base station. For example, the master base station #1 sends the SPCR #3 to the source secondary base station through an X2 interface or a core network.

c: The first intermediate node is the master base station #2, and the master base station #2 is an NR base station.

Example 1: If the trigger condition #1 is satisfied, the UE records the SPCR #1 in an LTE format. Because a standard of the master base station #2 is different from that of the master base station #1, the UE determines that the master base station #2 cannot parse the SPCR #1, and in S202, the UE records identification information of the master base station #1 as independent information.

A specific sending process includes the following steps:
Step 1: The UE sends the SPCR #1 and the identification information of the master base station #1 to the master base station #2.
Step 2: The master base station #2 sends the SPCR #1 to the master base station #1 based on the identification information of the master base station #1.

Example 2: If the trigger condition #2 is satisfied, the UE records the SPCR #2 in an NR format. Because a standard of the master base station #2 is the same as that of the target secondary base station, the UE determines that the master base station #2 can parse the SPCR #2, and in S202, the UE may record identification information of the target secondary base station in the SPCR #2. Certainly, the UE may alternatively record identification information of the target secondary base station outside the SPCR #2.

An example in which the SPCR #2 includes the identification information of the target secondary base station is used. A sending process of sending the SPCR via two intermediate nodes includes the following steps.

Step 1: The UE sends the SPCR #2 and identification information of the master base station #1 to the master base station #2.

Because the UE determines that the master base station #2 can parse the SPCR #2, the identification information of the master base station #1 may not be included in the SPCR #2 or may be included in the SPCR #2.

In addition, to indicate that the master base station #1 is an intermediate node for sending the SPCR #2 and the target secondary base station is a destination node corresponding to the SPCR #2, a direct indication manner or an indirect indication manner may be used. For details, refer to the foregoing descriptions.

Step 2: Because a standard of the master base station #1 is different from that of the target secondary base station, the master base station #2 determines that the master base station #1 cannot parse the SPCR #2.

Step 3: The master base station #2 obtains the identification information of the target secondary base station from the SPCR #2.

Step 4: The master base station #2 sends the SPCR #2 and the identification information of the target secondary base station to the master base station #1, where the identification information of the target secondary base station is used as information independent of the SPCR #2.

In this step, the SPCR #2 sent by the master base station #2 to the master base station #1 may retain the identification information of the target secondary base station, or the master base station #2 may delete the identification information of the target secondary base station from the SPCR #2.

Step 5: The master base station #1 sends the SPCR #2 to the target secondary base station based on the identification information of the target secondary base station.

Example 3: If the trigger condition #3 is satisfied, the UE records the SPCR #3 in an NR format. Because a standard of the master base station #2 is the same as that of the source secondary base station, the UE determines that the master base station #2 can parse the SPCR #3, and in S202, the UE may record identification information of the source secondary base station in the SPCR #3. Certainly, the UE may alternatively record identification information of the source secondary base station outside the SPCR #3.

An example in which the SPCR #3 includes the identification information of the source secondary base station is used. A sending process of sending the SPCR via two intermediate nodes includes the following steps.

Step 1: The UE sends the SPCR #3 and identification information of the master base station #1 to the master base station #2.

Because the UE determines that the master base station #2 can parse the SPCR #3, the identification information of the master base station #1 may not be included in the SPCR #3 or may be included in the SPCR #3.

In addition, to indicate that the master base station #1 is an intermediate node for sending the SPCR #3 and the source secondary base station is a destination node corresponding to the SPCR #3, a direct indication manner or an indirect indication manner may be used. For details, refer to the foregoing descriptions.

Step 2: Because a standard of the master base station #1 is different from that of the source secondary base station, the master base station #2 determines that the master base station #1 cannot parse the SPCR #3.

Step 3: The master base station #2 obtains the identification information of the source secondary base station from the SPCR #3.

Step 4: The master base station #2 sends the SPCR #3 and the identification information of the source secondary base station to the master base station #1, where the identification information of the source secondary base station is used as information independent of the SPCR #2.

In this step, the SPCR #3 sent by the master base station #2 to the master base station #1 may retain the identification information of the source secondary base station, or the master base station #2 may delete the identification information of the source secondary base station from the SPCR #3.

Step 5: The master base station #1 sends the SPCR #3 to the source secondary base station based on the identification information of the source secondary base station.

d: The first intermediate node is the master base station #2, and the master base station #2 is an LTE base station.

Example 1: If the trigger condition #1 is satisfied, the UE records the SPCR #1 in an LTE format. Because a standard of the master base station #2 is the same as that of the master base station #1, the UE determines that the master base station #2 can parse the SPCR #1, and in S202, the UE may record identification information of the master base station #1 in the SPCR #1. Certainly, the UE may alternatively record identification information of the master base station #1 outside the SPCR #1.

An example in which the SPCR #1 includes the identification information of the master base station #1 is used. A specific sending process includes the following steps:
Step 1: The UE sends the SPCR #1 to the master base station #2.
Step 2: The master base station #2 sends the SPCR #1 to the master base station #1 based on the identification information of the master base station #1 in the SPCR #1.

Example 2: If the trigger condition #2 is satisfied, the UE records the SPCR #2 in an NR format. Because a standard of the master base station #2 is different from that of the target secondary base station, the UE determines that the master base station #2 cannot parse the SPCR #2, and in S202, the UE records identification information of the target secondary base station as independent information.

An example in which the SPCR #2 is sent via two intermediate nodes is used. A specific sending process includes the following steps.

Step 1: The UE sends the SPCR #2, the identification information of the target secondary base station, and identification information of the master base station #1 to the master base station #2. The identification information of the target secondary base station and the identification information of the master base station #1 are not included in the SPCR #2.

In addition, to indicate that the master base station #1 is an intermediate node for sending the SPCR #2 and the target secondary base station is a destination node corresponding to the SPCR #2, a direct indication manner or an indirect indication manner may be used. For details, refer to the foregoing descriptions.

Step 2: The master base station #2 sends the SPCR #2 and the identification information of the target secondary base station to the master base station #1.

Step 3: The master base station #1 sends the SPCR #2 to the target secondary base station based on the identification information of the target secondary base station.

Example 3: If the trigger condition #3 is satisfied, the UE records the SPCR #3 in an NR format. Because a standard of the master base station #2 is different from that of the source secondary base station, the UE determines that the master base station #2 cannot parse the SPCR #3, and in S202, the UE records identification information of the source secondary base station as independent information.

An example in which the SPCR #3 is sent via two intermediate nodes is used. A specific sending process includes the following steps.

Step 1: The UE sends the SPCR #3, the identification information of the source secondary base station, and identification information of the master base station #1 to the master base station #2. The identification information of the source secondary base station and the identification information of the master base station #1 are not included in the SPCR #3.

In addition, to indicate that the master base station #1 is an intermediate node for sending the SPCR #3 and the source secondary base station is a destination node corresponding to the SPCR #3, a direct indication manner or an indirect indication manner may be used. For details, refer to the foregoing descriptions.

Step 2: The master base station #2 sends the SPCR #3 and the identification information of the source secondary base station to the master base station #1.

Step 3: The master base station #1 sends the SPCR #3 to the source secondary base station based on the identification information of the source secondary base station.

## Scenario 4: In an NE-DC scenario, the master base station #1 is an NR base station connected to a 5G core network, and the source secondary base station and the target secondary base station are LTE base stations.

a: The first intermediate node is the target secondary base station.

Example 1: If the trigger condition #1 is satisfied, the UE records the SPCR #1 in an NR format. Because a standard of the target secondary base station is different from that of the master base station #1, the UE determines that the target secondary base station cannot parse the SPCR #1, and in S202, the UE records identification information of the master base station #1 as independent information.

For a specific sending process, refer to Example 1 in a of Scenario 3.

Example 2: If the trigger condition #3 is satisfied, the UE records the SPCR #3 in an LTE format.

In a manner, because a standard of the target secondary base station is the same as that of the source secondary base station, the UE determines that the target secondary base station can parse the SPCR #3, and in S202, the UE may record identification information of the source secondary base station in the SPCR #3.

The UE sends the SPCR #3 to the source secondary base station via two intermediate nodes, which are respectively the target secondary base station and the master base station #1. For a specific sending process, refer to Example 2 in a of Scenario 3.

In another manner, in S202, the UE records the identification information of the source secondary base station as independent information outside the SPCR #3. For a specific sending process, refer to Example 2 in a of Scenario 3.

b: The first intermediate node is the master base station #1.

Example 1: If the trigger condition #2 is satisfied, the UE records the SPCR #2 in an LTE format. Because a standard of the master base station #1 is different from that of the target secondary base station, the UE determines that the master base station #1 cannot parse the SPCR #2, and in S202, the UE records identification information of the target secondary base station as independent information.

For a specific sending process, refer to Example 1 in b of Scenario 3.

Example 2: If the trigger condition #3 is satisfied, the UE records the SPCR #3 in an LTE format. Because a standard of the master base station #1 is different from that of the source secondary base station, the UE determines that the master base station #1 cannot parse the SPCR #3, and in S202, the UE records identification information of the source secondary base station as independent information.

For a specific sending process, refer to Example 2 in b of Scenario 3.

c: The first intermediate node is the master base station #2, and the master base station #2 is an NR base station.

Example 1: If the trigger condition #1 is satisfied, the UE records the SPCR #1 in an NR format. Because a standard of the master base station #2 is the same as that of the master base station #1, the UE determines that the master base station #2 can parse the SPCR #1, and in S202, the UE may record identification information of the master base station #1 in the SPCR #1. Certainly, the UE may alternatively record identification information of the master base station #1 outside the SPCR #1.

An example in which the SPCR #1 includes the identification information of the master base station #1 is used. For a specific sending process, refer to Example 1 in d of Scenario 3.

Example 2: If the trigger condition #2 is satisfied, the UE records the SPCR #2 in an LTE format. Because a standard of the master base station #2 is different from that of the target secondary base station, the UE determines that the master base station #2 cannot parse the SPCR #2, and in S202, the UE records identification information of the target secondary base station as independent information.

An example in which the SPCR #2 is sent via two intermediate nodes is used. For a specific sending process, refer to Example 2 in d of Scenario 3.

Example 3: If the trigger condition #3 is satisfied, the UE records the SPCR #3 in an LTE format. Because a standard of the master base station #2 is different from that of the source secondary base station, the UE determines that the master base station #2 cannot parse the SPCR #3, and in S202, the UE records identification information of the source secondary base station as independent information.

An example in which the SPCR #3 is sent via two intermediate nodes is used. For a specific sending process, refer to Example 3 in d of Scenario 3.

d: The first intermediate node is the master base station #2, and the master base station #2 is an LTE base station.

Example 1: If the trigger condition #1 is satisfied, the UE records the SPCR #1 in an NR format. Because a standard of the master base station #2 is different from that of the master base station #1, the UE determines that the master base station #2 cannot parse the SPCR #1, and in S202, the UE records identification information of the master base station #1 as independent information.

For a specific sending process, refer to Example 1 in c of Scenario 3.

Example 2: If the trigger condition #2 is satisfied, the UE records the SPCR #2 in an LTE format. Because a standard of the master base station #2 is the same as that of the target secondary base station, the UE determines that the master base station #2 can parse the SPCR #2, and in S202, the UE may record identification information of the target secondary base station in the SPCR #2. Certainly, the UE may alternatively record identification information of the target secondary base station outside the SPCR #2.

An example in which the SPCR #2 includes the identification information of the target secondary base station is used. For a sending process of sending the SPCR via two intermediate nodes, refer to Example 2 in c of Scenario 3.

Example 3: If the trigger condition #3 is satisfied, the UE records the SPCR #3 in an LTE format. Because a standard of the master base station #2 is the same as that of the source secondary base station, the UE determines that the master base station #2 can parse the SPCR #3, and in S202, the UE may record identification information of the source secondary base station in the SPCR #3. Certainly, the UE may alternatively record identification information of the source secondary base station outside the SPCR #3.

An example in which the SPCR #3 includes the identification information of the source secondary base station is used. For a sending process of sending the SPCR via two intermediate nodes, refer to Example 3 in c of Scenario 3.

According to the foregoing method, FIG. 4 shows a communication apparatus provided in an embodiment of this application. The communication apparatus includes a transceiver unit 401 and a processing unit 402.

The transceiver unit 401 may be configured to implement a corresponding information receiving and sending function. The transceiver unit 401 may also be referred to as a communication interface or a communication unit. The processing unit 402 may be configured to perform a processing operation.

For example, the apparatus further includes a storage unit. The storage unit may be configured to store instructions and/or data. The processing unit 402 may read the instructions and/or the data in the storage unit, so that the apparatus implements actions of the apparatus in the foregoing method embodiments.

In a first implementation, the apparatus may be an access network device, or a component (for example, a chip) of the access network device.

Optionally, the transceiver unit and the processing unit in the access network device are configured to implement related operations of the first node in the foregoing method embodiments. For example, the transceiver unit is configured to implement S201, and the processing unit is configured to implement S204.

Optionally, the transceiver unit and the processing unit in the access network device are configured to implement related operations of the source master base station (the master base station #1) in the foregoing method embodiments. For example, the transceiver unit is configured to send a secondary base station handover command to UE.

Optionally, the transceiver unit and the processing unit in the access network device are configured to implement related operations of the first intermediate node in the foregoing method embodiments. For example, the transceiver unit is configured to receive an SPCR from the UE. The processing unit is configured to determine whether a second intermediate node can parse the SPCR.

In a second implementation, the apparatus may be the UE in the foregoing embodiments, or may be a component (for example, a chip) of the UE. The transceiver unit and the processing unit may be configured to implement related operations of the UE in the foregoing method embodiments. For example, the transceiver unit is configured to implement S203, and the processing unit is configured to implement S202.

It should be understood that, a specific process in which each unit performs the foregoing corresponding steps is described in detail in the foregoing method embodiments. For brevity, details are not described herein again.

It should also be understood that the apparatus herein is presented in the form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus may be specifically the first network element in the foregoing embodiments, and may be configured to perform the procedures and/or steps corresponding to the first network element in the foregoing method embodiments. Alternatively, the apparatus may be specifically the network management network element in the foregoing embodiments, and may be configured to perform the procedures and/or steps corresponding to the network management network element in the foregoing method embodiments. To avoid repetition, details are not described herein again.

The foregoing communication apparatus has a function of implementing corresponding steps performed by the apparatus in the foregoing method. The function may be implemented by hardware, or may be implemented by hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and a related processing operation in the method embodiments.

In addition, the transceiver unit 401 may alternatively be a transceiver circuit (for example, the transceiver circuit may include a receiver circuit and a transmitter circuit), and the processing unit may be a processing circuit.

It should be noted that the apparatus in FIG. 4 may be an apparatus in the foregoing method embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

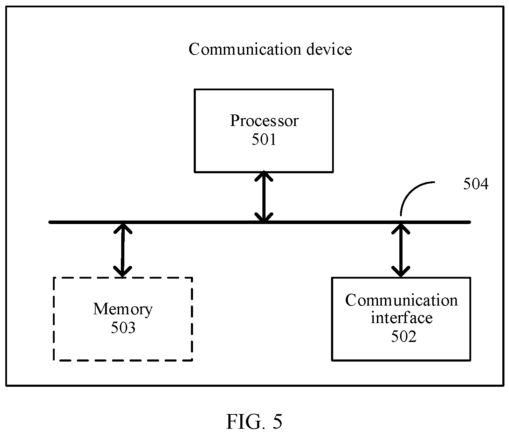

An embodiment of this application further provides a communication device. As shown in FIG. 5, the communication device includes a processor 501 and a communication interface 502. The processor 501 is configured to execute a computer program or instructions stored in a memory 503, or read data stored in the memory 503, to perform the methods in the foregoing method embodiments. For example, there are one or more processors 501. The communication interface 502 is configured to receive and/or send a signal. For example, the processor 501 is configured to control the communication interface 502 to receive and/or send a signal.

For example, as shown in FIG. 5, the communication device further includes the memory 503, and the memory 503 is configured to store a computer program or instructions and/or data. The memory 503 may be integrated with the processor 501, or may be disposed separately. For example, there is one or more memories 503.

For example, the processor 501, the communication interface 502, and the memory 503 are connected to each other through a bus 504. The bus 504 may be a peripheral component interconnect (peripheral component interconnect, PCI) bus, an extended industry standard architecture (extended industry standard architecture, EISA) bus, or the like. The bus 504 may be classified into an address bus, a data bus, a control bus, and the like. For ease of representation, only one bold line is used for representation in FIG. 5, but it does not indicate that there is only one bus or only one type of bus.

For example, the processor 501 is configured to execute the computer program or the instructions stored in the memory 503.

In a first implementation, the device may be an access network device or a component (for example, a chip) of the access network device.

Optionally, the communication interface and the processor in the access network device are configured to implement related operations of the first node in the foregoing method embodiments. For example, the communication interface is configured to implement S201, and the processor is configured to implement S204.

Optionally, the communication interface and the processor in the access network device are configured to implement related operations of the source master base station (the master base station #1) in the foregoing method embodiments. For example, the communication interface is configured to send a secondary base station handover command to UE.

Optionally, the communication interface and the processor in the access network device are configured to implement related operations of the first intermediate node in the foregoing method embodiments. For example, the communication interface is configured to receive an SPCR from the UE. The processor is configured to determine whether a second intermediate node can parse the SPCR.

In a second implementation, the device may be the UE in the foregoing embodiments, or may be a component (for example, a chip) of the UE. The communication interface and the processor may be configured to implement related operations of the UE in the foregoing method embodiments. For example, the communication interface is configured to implement S203, and the processor is configured to implement S202.

It should be understood that the processor (such as the processor 501) mentioned in embodiments of this application may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic logic array (generic logic array, GAL), or any combination thereof.

It may be further understood that the memory (such as the memory 503) mentioned in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) serving as an external cache.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium, and includes several instructions for instructing a computer device (which may be such as a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

It may be understood that in embodiments of this application, the terminal and/or the access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, comprising:
receiving first information from a first node, wherein the first information indicates a trigger condition for recording a first report, and a terminal accesses a master base station;
recording the first report when the trigger condition is satisfied, wherein the first report comprises information in a process in which the terminal is handed over from a source secondary base station to a target secondary base station, and there is a correspondence between the first report and the first node; and
sending the first report to the first node.

2. The method according to claim 1, wherein
the first report comprises identification information of the first node.

3. The method according to claim 1, wherein the method further comprises:
recording identification information of the first node, wherein the identification information of the first node is information independent of the first report.

4. The method according to any one of claims 1 to 3, wherein the sending the first report to the first node comprises:
directly sending the first report to the first node.

5. The method according to any one of claims 1 to 3, wherein
the sending the first report to the first node comprises:
sending the first report to the first node via at least one relay node; and
the method further comprises:
sending the identification information of the first node to a first intermediate node, wherein the first intermediate node is a node accessed by the terminal in the at least one intermediate node.

6. The method according to claim 5, wherein
the method further comprises:
determining whether the first intermediate node supports a radio access technology RAT corresponding to the first report, wherein
the first intermediate node supports the RAT corresponding to the first report, and the first report comprises the identification information of the first node; or
the first intermediate node does not support the RAT corresponding to the first report, and the identification information of the first node is the information independent of the first report; or
the first intermediate node supports the RAT corresponding to the first report, and the identification information of the first node is the information independent of the first report.

7. The method according to any one of claims 1 to 6, wherein
the first node is the master base station, and the trigger condition is that a potential failure occurs on a communication link between the terminal and the master base station; or
the first node is the source secondary base station, and the trigger condition is that a potential failure occurs on a communication link between the terminal and the source secondary base station; or
the first node is the target secondary base station, and the trigger condition is that a potential failure occurs on a communication link between the terminal and the target secondary base station.

8. A communication method, comprising:
receiving a first report from a terminal, wherein the first report corresponds to a first node, the first report comprises information in a process in which the terminal is handed over from a source secondary base station to a target secondary base station, and the terminal accesses a source master base station; and
sending the first report to the first node.

9. The method according to claim 8, wherein
a first intermediate node supports a radio access technology RAT corresponding to the first report, and the first report further comprises identification information of the first node.

10. The method according to claim 8, wherein the method further comprises:
receiving identification information of the first node from the terminal, wherein the identification information of the first node is information independent of the first report.

11. The method according to any one of claims 8 to 10, wherein the sending the first report to the first node comprises:
directly sending the first report to the first node.

12. The method according to any one of claims 8 to 10, wherein
the sending the first report to the first node comprises:
sending the first report to the first node via a second intermediate node.

13. The method according to claim 12, wherein
if the first report comprises the identification information of the first node, the sending the first report to the first node via a second intermediate node comprises:
obtaining the identification information of the first node from the first report when the second intermediate node does not support the RAT corresponding to the first report; and
sending the first report and the identification information of the first node to the second intermediate node, wherein the identification information of the first node is the information independent of the first report.

14. The method according to any one of claims 8 to 13, wherein
the first intermediate node is the source master base station, the target secondary base station, or a target master base station, and the target master base station is a master base station that is accessed by the terminal after the terminal is handed over from the source master base station; and
the first node is the source master base station, and an identifier of the first node is an identifier of a primary cell managed by the source master base station; or
the first node is the source secondary base station, and an identifier of the first node is an identifier of a primary secondary cell managed by the source secondary base station; or
the first node is the target secondary base station, and an identifier of the first node is an identifier of a primary secondary cell managed by the target secondary base station.

15. A communication method, comprising:
sending first information, wherein the first information indicates a trigger condition for recording a first report, and a first node is a master base station, a source secondary base station, or a target secondary base station accessed by a terminal;
receiving the first report from the terminal, wherein the first report comprises information in a process in which the terminal is handed over from the source secondary base station to the target secondary base station, and the first report is sent by the terminal when the trigger condition is satisfied; and
optimizing a secondary base station handover procedure based on the first report.

16. The method according to claim 15, wherein
the first node is the master base station, and the trigger condition is that a potential failure occurs on a communication link between the terminal and the master base station; or
the first node is the source secondary base station, and the trigger condition is that a potential failure occurs on a communication link between the terminal and the source secondary base station; or
the first node is the target secondary base station, and the trigger condition is that a potential failure occurs on a communication link between the terminal and the target secondary base station.

17. A communication apparatus, comprising a unit configured to perform the method according to any one of claims 1 to 7, a unit configured to perform the method according to any one of claims 8 to 14, or a unit configured to perform the method according to claim 15 or 16.

18. A communication device, comprising a communication interface and a processor, wherein the processor is configured to execute a computer program or instructions, to enable the communication device to perform the method according to any one of claims 1 to 7, the method according to any one of claims 8 to 14, or the method according to claim 15 or 16.

19. A computer-readable storage medium, comprising a computer program or instructions, wherein when the computer program or the instructions are run on a computer, the computer is enabled to perform the method according to any one of claims 1 to 7, the method according to any one of claims 8 to 14, or the method according to claim 15 or 16.

20. A computer program product, comprising instructions, wherein when the instructions are run on a computer, the computer is enabled to perform the method according to any one of claims 1 to 7, the method according to any one of claims 8 to 14, or the method according to claim 15 or 16.

21. A communication system, comprising a first intermediate node and a first node, wherein
the first intermediate node is configured to perform the method according to any one of claims 8 to 14; and
the first node is configured to perform the method according to claim 15 or 16.

22. The communication system according to claim 21, further comprising a terminal, wherein the terminal is configured to perform the method according to any one of claims 1 to 7.
